# EUROPEAN PATENT APPLICATION

(11) **EP 4 550 473 A1**
(43) Date of publication of application: **07.05.2025**
(21) Application number: 24208038.0
(22) Date of filing: 22.10.2024
(51) Int. Cl.: H01M 4/58, H01M 10/0525, H01M 10/0567, H01M 4/131, H01M 4/136, H01M 4/485

(54) **RECHARGEABLE LITHIUM BATTERIES**

(30) Priority: 31.10.2023 KR 20230148301
(71) Applicant: SAMSUNG SDI CO., LTD., Yongin-si, Gyeonggi-do 17084 (KR)
(72) Inventor: Lee, Minju, 17084 Yongin-si, Gyeonggi-do (KR); Oh, Songyul, 17084 Yongin-si, Gyeonggi-do (KR); Kim, Myungseop, 17084 Yongin-si, Gyeonggi-do (KR); Lee, Boram, 17084 Yongin-si, Gyeonggi-do (KR); Lim, Jin-Hyeok, 17084 Yongin-si, Gyeonggi-do (KR); Cho, Erang, 17084 Yongin-si, Gyeonggi-do (KR)
(74) Representative: Michalski Hüttermann & Partner Patentanwälte mbB

(57) **Abstract**

A rechargeable lithium battery that includes a positive electrode including a positive electrode active material layer and a current collector; a negative electrode; and an electrolyte solution is provided. The positive electrode active material layer and the electrolyte solution include an additive, a total amount of the additive included in the positive electrode active material layer and the additive included in the electrolyte solution is at least about 0.1 wt% and at most about 1 wt% based on a total positive electrode active material layer. A boiling point of the additive is greater than about 200 °C.

## Description

### BACKGROUND

### 1. Field

According to one or more embodiments, the present disclosure relates to a rechargeable lithium battery.

### 2. Description of the Related Art

A portable information device such as a cell phone, a laptop, a smart phone, and/or the like and/or an electric vehicle may utilize as a driving power source a rechargeable lithium battery having relatively high energy density and relatively high portability. Recently, research has been actively conducted to utilize a rechargeable lithium battery with relatively high energy density as a driving power source, e.g., for hybrid and/or electric vehicles and/or a power storage power source, e.g., for resident power storage (e.g., a power wall).

As the demand for low-cost high-capacity energy storage devices increases, it is required (or these is a desire) to develop positive electrodes capable of achieving high capacity and high energy density. For example, high-density electrodes are being developed by applying more of an electrode active material per unit area onto a current collector followed by compression, e.g., to reduce the volume of the electrode active material.

However, such high-density electrodes may have reduced pore volume under the same volume and/or may have increased non-uniformity between the electrodes. As a result, the amount of an electrolyte solution that may be added to the battery (e.g., by a process of impregnation) may be limited due to the reduced pore volume.

### SUMMARY

One or more aspects are directed toward a rechargeable lithium battery with improved battery capacity, cycle-life characteristics, and rapid charging characteristics by improving the impregnability of the electrolyte solution.

Additional aspects will be set forth in part in the description which follows and, in part, will be apparent from the description, or may be learned by practice of the presented embodiments of the disclosure.

According to one or more embodiments, a rechargeable lithium battery includes a positive electrode including a positive electrode active material layer and a current collector; a negative electrode; and an electrolyte solution; wherein the positive electrode active material layer and the electrolyte solution may each include an additive, a total of an amount of the additive included in the positive electrode active material layer and an amount of the additive included in the electrolyte solution may be at least (e.g., greater than or equal to) about 0.1 wt% and at most (e.g., less than) about 1 wt% based on a total of an amount of the positive electrode active material layer, and a boiling point of the additive may be at least (e.g., greater than) about 200 °C.

According to one or more embodiments, the rechargeable lithium battery includes a high-density electrode with a large volume and substantially uniform pores, thereby improving the impregnability of the electrolyte solution, and/or improving capacity, cycle-life characteristics, and/or rapid charging characteristics of the battery.

### BRIEF DESCRIPTION OF THE DRAWINGS

FIG. 1 is a schematic diagram showing a rechargeable lithium battery according to some embodiments of the present disclosure.
FIG. 2 is a graph showing the viscosity (rheology) according to shear rate of the positive electrode slurries prepared in Example 1, Comparative Example 1, and Comparative Example 3.
FIG. 3 is a damping factor graph showing the (viscoelastic) modulus (Pa) according to strain (%) of the positive electrode slurries prepared in Example 1, Comparative Example 1, and Comparative Example 3.
FIG. 4 is a graph showing the results of evaluating impregnability of electrolyte solutions for the positive electrodes prepared in Example 3 and Comparative Example 1.
FIG. 5 is a graph measuring the positive electrode porosity in Examples 1 and 2 and Comparative Examples 1 and 2.
FIG. 6 is a graph measuring the positive electrode porosity in Example 3 and Comparative Example 1.
FIG. 7 is a graph measuring the positive electrode porosity in Examples 4 to 6 and Comparative Example 4.
FIG. 8 is a graph showing the high-temperature storage performance of the rechargeable lithium battery cells manufactured in Example 1 and Comparative Example 1.
FIG. 9 is a graph showing the capacity retention rates of the rechargeable lithium battery cells manufactured in Example 1 and Comparative Example 1 at 25 °C and 60 cycles.

### DETAILED DESCRIPTION

Hereinafter, specific embodiments will be described in more detail so that those of ordinary skill in the art can easily implement them. Examples of which are illustrated in the accompanying drawings, wherein like reference numerals refer to like elements throughout, and duplicative descriptions thereof may not be provided. Accordingly, the embodiments are merely described, by referring to the drawings, to explain aspects of the present description. However, the present disclosure may be embodied in many different forms and is not construed as limited to the example embodiments set forth herein, rather the present disclosure is defined by the scope of claims.

The terminology utilized herein is utilized to describe embodiments only, and is not intended to limit the present disclosure. The singular expressions "a," "an," and "the" include the plural expressions, including "at least one," unless the context clearly dictates otherwise.

As utilized herein, "combination thereof' refers to a mixture, a stack, a composite, a copolymer, an alloy, a blend, a reaction product, and/or the like of the constituents.

Herein, it should be understood that terms such as "comprises," "comprise," "comprising," "includes," "including," "include," "having," "has," and/or "have" are intended to designate the presence of an embodied aspect, number, operation, element, and/or a (e.g., any suitable) combination thereof, but it does not preclude the possibility of the presence or addition of one or more other features, number, operation, element, and/or a (e.g., any suitable) combination thereof.

In the drawings, the thickness of layers, films, panels, regions, and/or the like, are exaggerated for clarity wherein like reference numerals designate like elements, and duplicative descriptions thereof may not be provided throughout the specification. It will be understood that if (e.g., when) an element such as a layer, film, region, or substrate is referred to as being "on" another element, it can be directly on the other element or intervening elements may also be present. In contrast, if (e.g., when) an element is referred to as being "directly on" another element, there are no intervening elements present.

In one or more embodiments, "layer" herein includes not only a shape formed on the whole surface if (e.g., when) viewed from a plan view, but also a shape formed on a partial surface.

It will be understood that, although the terms "first," "second," "third," and/or the like may be utilized herein to describe one or more suitable elements, components, regions, layers and/or sections, these elements, components, regions, layers and/or sections should not be limited by these terms. These terms are only utilized to distinguish one element, component, region, layer or section from another element, component, region, layer or section. Thus, a first element, component, region, layer or section described herein may be termed a second element, component, region, layer or section without departing from the teachings set forth herein.

As utilized herein, the term "and/or" includes any and all combinations of one or more of the associated listed items. Expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

Spatially relative terms, such as "beneath," "below," "lower," "above," "upper" and/or the like, may be utilized herein to easily describe the relationship between one element or feature and another element or feature. It will be understood that the spatially relative terms are intended to encompass different orientations of a device in utilization or operation in addition to the orientation illustrated in the drawings. For example, if (e.g., when) the device in the drawings is turned over, elements described as "below" or "beneath" other elements or features will be oriented "above" the other elements or features. Thus, the example term "below" can encompass both (e.g., simultaneously) the orientations of above and below. The device may be otherwise oriented (rotated 90 degrees or at other orientations), and the spatially relative terms utilized herein may be interpreted accordingly.

The terminology utilized herein is utilized for the purpose of describing particular embodiments only and is not intended to limit the present disclosure. Unless otherwise defined, all terms (including chemical, technical and scientific terms) utilized herein have the same meaning as commonly understood by one of ordinary skill in the art to which this disclosure pertains. It will be further understood that terms, such as those defined in commonly utilized dictionaries, should be interpreted as having a meaning that is consistent with their meaning in the context of the related art and the present disclosure, and will not be interpreted in an idealized or overly formal sense.

Example embodiments are described herein with reference to cross-sectional views, which are schematic views of idealized embodiments. As such, variations from the shapes of the illustrations as a result, for example, of manufacturing techniques and/or tolerances, are to be expected. Thus, embodiments described herein should not be construed as being limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawings are schematic in nature and their shapes are not intended to illustrate the precise shape of a region and are not intended to limit the scope of the present claims.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

### Definitions

The term "particle diameter" as utilized herein refers to an average diameter of particles if (e.g., when) the particles are spherical, and refers to an average major axis length of particles if (e.g., when) the particles are non-spherical. For example, an average particle diameter may be measured by a method well suitable to those skilled in the art, for example, by measuring with a particle size analyzer, or by an optical microscopic image such as a transmission electron microscopic image or a scanning electron microscopic image. It may be possible to obtain an average particle diameter value by measuring utilizing a dynamic light scattering method, performing data analysis, counting the number of particles for each particle size range, and calculating from this. Unless otherwise defined, the "average particle diameter" may refer to the diameter (D50) of particles having a cumulative volume of 50 volume% in the particle size distribution. If (e.g., when) measuring by laser diffraction, more specifically, the particles to be measured are dispersed in a dispersion medium and then introduced into a related art laser diffraction particle size measuring device (e.g., MT 3000 available from Microtrac, Ltd.) utilizing ultrasonic waves at about 28 kHz, and after irradiation with an output of 60 W, the average particle diameter (D50) based on 50% of the particle size distribution in the measuring device can be calculated.

D90 refers to a size of particles corresponding to a cumulative volume of 90% calculated from the side of particles having the smallest particle size in a particle size distribution as measured by a laser diffraction method.

D10 refers to a size of particles corresponding to a cumulative volume of 10% calculated from the side of particles having the smallest particle size in a particle size distribution as measured by a laser diffraction method.

In present disclosure, "not include a or any 'component'" "exclude a or any 'component'", "'component'-free", and/or the like refers to that the "component" not being added, selected or utilized as a component in the composition/structure, but the "component" of less than a suitable amount may still be included due to other impurities and/or external factors.

Herein, "or" is not to be construed as an exclusive meaning, for example, "A or B" is construed to include A, B, A+B, and/or the like.

As utilized herein, if (e.g., when) a definition is not otherwise provided, "substituted" refers to replacement of at least one hydrogen of a substituent or a compound by a substituent of a deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, and/or a (e.g., any suitable) combination thereof.

For example, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. In one or more embodiments, "substituted" may refer to replacement of at least one hydrogen of a substituent or a compound by deuterium, a halogen, a C1 to C5 alkyl group, a C6 to C18 aryl group, a C1 to C5 fluoroalkyl group, or a cyano group. For example, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

The C1 to C30 refer to that the number of carbons is 1 to 30.

### Introduction

In some embodiments, a rechargeable lithium battery includes a positive electrode including a positive electrode active material layer and a current collector; a negative electrode; and an electrolyte solution. In some embodiments, the positive electrode active material layer and the electrolyte solution may each include an additive, and a total (e.g., sum) of an amount of the additive included in the positive electrode active material layer and an amount of the additive included in the electrolyte solution may be at least (e.g., greater than or equal to) about 0.1 wt% and at most (e.g., less than) about 1 wt% based on a total of an amount of the positive electrode active material layer. In some embodiments, a boiling point of the additive may be at least (e.g., greater than) about 200 °C.

In some embodiments, for manufacturing the rechargeable lithium battery, if (e.g., when) the positive electrode active material layer is manufactured by mixing the additive with the positive electrode slurry, and then if (e.g., when) the electrolyte solution is injected into the electrode assembly, the additive included in the positive electrode active material layer may be eluted into the electrolyte solution.

Because the additive occupies a solid space within the positive electrode, as the additive dissociates into the electrolyte solution, large-volume pores may be uniformly (e.g., substantially uniformly) formed in the space where the additive escapes in the positive electrode active material layer.

Among the additive in the positive electrode active material layer, some of the additive that may have not eluted may be included in the positive electrode active material layer, and (e.g., some of) the additive that may have eluted toward the electrolyte solution may be included in the electrolyte solution.

Therefore, the additive included in the positive electrode active material layer and the additive included in the electrolyte solution may be the same, but the amount (e.g., content) or each may be different relative to, or from, each other.

In one or more embodiments, because the additive may be a compound that has been highly suitable (e.g., conventionally) as an additive for an electrolyte solution for a rechargeable lithium battery, battery performance and stability may be improved by including it in the electrolyte solution of the present disclosure.

For example, electrolyte solution impregnability may be significantly improved if (e.g., when) pores are uniformly (substantially uniformly) distributed in the positive electrode active material layer, and lithium ion passages are secured, thereby improving battery capacity, cycle-life characteristics, and rapid charging characteristics.

Hereinafter, the compounds included in the additive will be described in more detail.

The additive may include at least one selected from among a bicyclic sulfate-based compound, a lithium borate compound, and/or a (e.g., any suitable) combination thereof.

The bicyclic sulfate-based compound(s) may form (or provide) a SEI (solid electrolyte interface) layer on the surface of the negative electrode and/or a protective layer on the surface of the positive electrode, and may provide or have improved thermal stability, and thus they can improve cycle-life characteristics of lithium batteries at high temperatures.

The bicyclic sulfate-based compound may be represented by Chemical Formula 1.

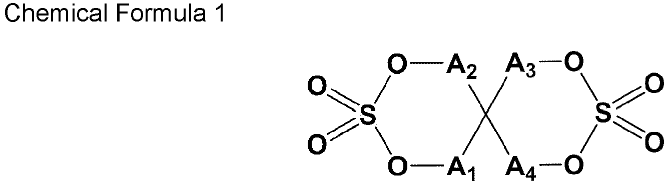

In Chemical Formula 1, A₁, A₂, A₃, and A₄ may each independently be a covalent bond; an alkylene group having 1 to 5 carbon atoms substituted or unsubstituted with a substituent; a carbonyl group; or a sulfinyl group, provided that A₁ and A₂ may not simultaneously or both be a covalent bond (e.g., may not each be covalently bonded at the same time), and As and A₄ may not simultaneously or both be a covalent bond (e.g., may not each be covalently bonded at the same time).

For example, at least one of A₁, A₂, A₃, and A₄ may be an unsubstituted alkylene group having 1 to 5 carbon atoms or a substituted alkylene group having 1 to 5 carbon atoms, wherein a substituent of the substituted alkylene group having 1 to 5 carbon atoms may be a halogen, an alkyl group having 1 to 20 carbon atoms substituted or unsubstituted with a halogen, an alkenyl group having 2 to 20 carbon atoms substituted or unsubstituted with a halogen, an alkynyl group having 2 to 20 carbon atoms substituted or unsubstituted with a halogen, a cycloalkenyl group having 3 to 20 carbon atoms substituted or unsubstituted with a halogen, a heterocyclyl group having 3 to 20 carbon atoms substituted or unsubstituted with a halogen, an aryl group having 6 to 40 carbon atoms substituted or unsubstituted with a halogen, a heteroaryl group having 2 to 40 carbon atoms substituted or unsubstituted with a halogen, or a polar functional group including one or more heteroatoms.

For example, at least one of A₁, A₂, A₃, and A₄ may be an unsubstituted alkylene group having 1 to 5 carbon atoms or a substituted alkylene group having 1 to 5 carbon atoms, wherein the substituent of the substituted alkylene group with 1 to 5 carbon atoms may be a halogen, a methyl group, an ethyl group, a propyl group, an isopropyl group, a butyl group, a tert-butyl group, a trifluoromethyl group, a tetrafluoroethyl group, a phenyl group, a naphthyl group, a tetrafluorophenyl group, a pyrrolyl group, or a pyridinyl group, but is not necessarily limited thereto and may be (e.g., any) one that may suitably be utilized as a substituent for an alkylene group in the art.

As an example, in the bicyclic sulfate-based compound represented by Chemical Formula 1, the substituent of the alkylene group may be a polar functional group including a heteroatom, and the heteroatom of the polar functional group may be one or more of (e.g., at least one selected from among) a halogen, oxygen, nitrogen, phosphorus, sulfur, silicon, and boron.

As an example, an alkyl group, alkenyl group, alkynyl group, cycloalkyl group, aryl group, heteroaryl group, alkylaryl group, trialkylsilyl group, or aralkyl group included in the polar functional group including the heteroatom may be substituted with a halogen, for example fluorine (F).

For example, the bicyclic sulfate-based compound may include at least one (e.g., any one or more) of the compounds represented by Chemical Formulas 1-1 to 1-7.

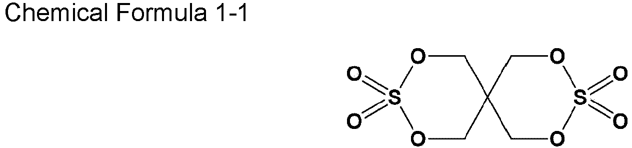

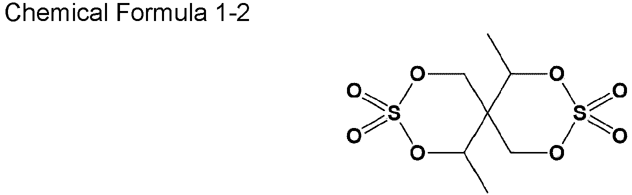

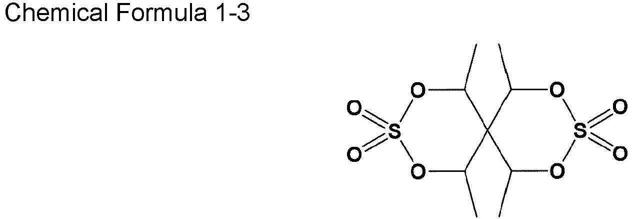

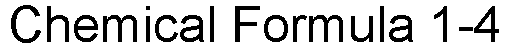

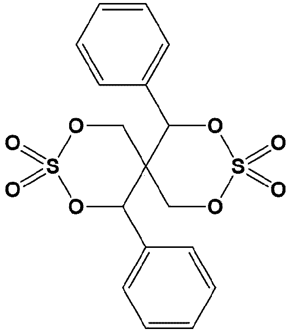

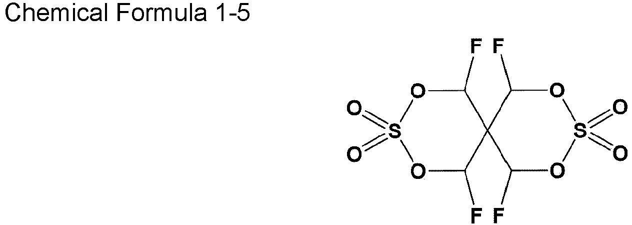

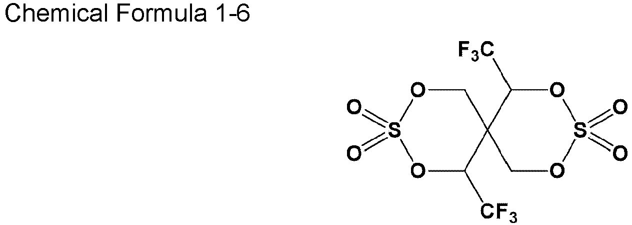

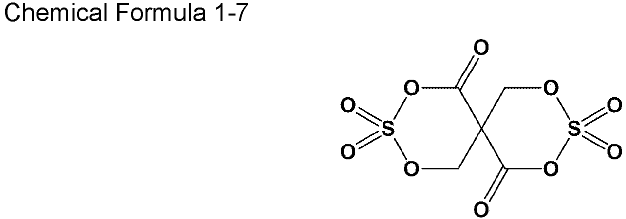

The lithium borate compound may improve the high-temperature stability of batteries, reduce battery internal resistance, and improve low-temperature cycle-life characteristics.

The lithium borate compound may include lithium tetrafluoroborate (LiBF₄), lithium bis(oxalato)borate (LiB(C₂O₄)₂, LiBOB), lithium difluoro(oxlato)borate (LiFOB), lithium bis(2-methyl-2-fluoro-malonato)borate, and/or a (e.g., any suitable) combination thereof.

As an example, a total (e.g., sum) of an amount of the additive included in the positive electrode active material layer and an amount of the additive included in the electrolyte solution may be included in an amount of at least (e.g., greater than or equal to) about 0.1 wt% and at most (e.g., less than) about 1 wt% based on a total of an amount of positive electrode active material layer.

Also, for example, a weight ratio of the amount of the additive included in the positive electrode active material layer to the amount of additive included in the electrolyte solution may be about 10:90 to about 40:60.

If (e.g., when) the described weight ratio(s) is satisfied, substantially uniform and large-volume pores may be sufficiently provided or secured within the positive electrode active material layer.

The boiling point of the additive included in the rechargeable lithium battery according to some embodiments may be at least (e.g., greater than or exceed) about 200 °C. For example, the boiling point of the additive may be greater than about 200 °C and less than or equal to about 500°C. In the method of manufacturing a rechargeable lithium battery according to some embodiments (as described in more detail elsewhere herein), a drying temperature in the operation of drying the electrode slurry may be about 50 °C to about 200 °C. For example, the boiling point of the additive should be at least (e.g., greater than or exceed) about 200 °C to ensure that the additive remains in the positive electrode even after the drying process.

Hereinafter, a rechargeable lithium battery according to some embodiments will be described in more detail.

### Rechargeable lithium battery

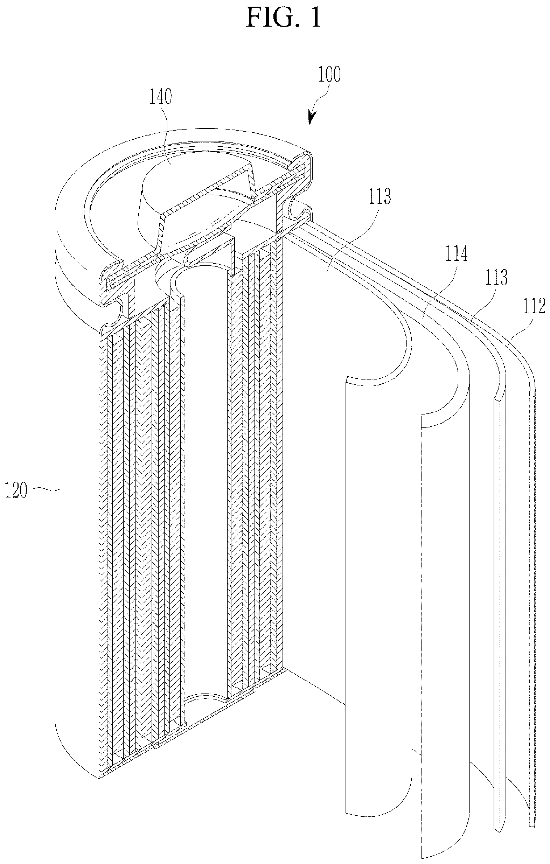

FIG. 1 is a schematic diagram showing a rechargeable lithium battery according to some embodiments. Referring to FIG. 1, a rechargeable lithium battery 100 includes a battery cell including a positive electrode 114, a negative electrode 112 facing the positive electrode 114, a separator 113 between the positive electrode 114 and the negative electrode 112. In some embodiments, an electrolyte may impregnate the positive electrode 114, the negative electrode 112, and the separator 113. In some embodiments, the rechargeable lithium battery 100 includes a battery case 120 housing the battery cell, and a sealing member 140 sealing the battery case 120.

### Positive Electrode

The positive electrode includes a current collector and a positive electrode active material layer on the current collector. The positive electrode active material layer includes an additive including a bicyclic sulfate-based compound, a lithium borate compound, and/or a (e.g., any suitable) combination thereof. The positive electrode active material layer includes a positive electrode active material, and may optionally further include a binder and/or a conductive material.

The positive electrode active material may be selected or applied without limitation as long as it is generally utilized in a rechargeable lithium battery. For example, the positive electrode active material may be a compound capable of reversible intercalation and deintercalation of lithium (e.g., ions), and may include a compound represented by at least one selected from among the following chemical formulas.
LiₐA_{1-b}X_{b}D₂ (0.90 ≤ a ≤ 1.8, 0 ≤ b ≤ 0.5);
LiₐA_{1-b}X_{b}O_{2-c}D_{c} (0.90 ≤ a ≤ 1.8, 0 ≤ b ≤ 0.5, 0 ≤ c ≤ 0.05);
LiₐE_{1-b}X_{b}O_{2-c}D_{c} (0.90 ≤ a ≤ 1.8, 0 ≤ b ≤ 0.5, 0 ≤ c ≤ 0.05);
LiaE2-bXbO4-cDc (0.90 ≤ a ≤ 1.8, 0 ≤ b ≤ 0.5, 0 ≤ c ≤ 0.05);
LiₐNi_{1-b-c}CO_{b}X_{c}D_{α} (0.90 ≤ a ≤1.8, 0 ≤ b ≤ 0.5, 0 ≤ c ≤ 0.5, 0 <α ≤ 2);
LiₐNi_{1-b-c}Co_{b}X_{c}O_{2-α}T_{α} (0.90 ≤ a ≤ 1.8, 0 <_ b ≤ 0.5, 0 ≤ c ≤ 0.05, 0 <α <2);
LiₐNi_{1-b-c}Co_{b}X_{c}O_{2-α}T₂ (0.90 ≤ a ≤ 1.8, 0 ≤ b ≤ 0.5, 0 ≤ c ≤ 0.05, 0 <α <2);
LiₐNi_{1-b-c}Mn_{b}X_{c}D_{α} (0.90 ≤ a ≤ 1.8, 0 ≤ b ≤ 0.5, 0 ≤ c ≤ 0.05, 0 <α ≤ 2);
LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 <α < 2);
LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 <α < 2);
LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);
LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);
LiₐNiG_{b}O₂ (0.90 ≤ a ≤ 1.8, 0.001 ≤ b ≤ 0.1);
LiₐCOG_{b}O₂ (0.90 ≤ a ≤ 1.8, 0.001 ≤ b ≤ 0.1);
LiₐMn_{1-b}G_{b}O₂ (0.90 ≤ a ≤ 1.8, 0.001 ≤ b ≤ 0.1);
LiₐMn₂G_{b}O₄ (0.90 ≤ a ≤ 1.8, 0.001 ≤ b ≤ 0.1);
LiₐMn_{1-g}G_{g}PO₄ (0.90 ≤ a ≤ 1.8, 0 ≤ g ≤ 0.5);
QO₂; QS₂; LiQS₂;
V₂O₅; LiV₂O₅;
LiZO₂;
LiNiVO₄;
Li_{(3-f)}J₂(PO₄)₃ (0 ≤ f ≤ 2);
Li_{(3-f)}Fe₂(PO₄)₃ (0 ≤ f ≤ 2); and
LiₐFePO₄ (0.90 ≤ a ≤ 1.8).

In the described chemical formulas, A is of (e.g., selected from among) Ni, Co, Mn, and/or a (e.g., any suitable) combination thereof; X is of (e.g., selected from among) Al, Ni, Co, Mn, Cr, Fe, Mg, Sr, V, a rare earth element, and/or a (e.g., any suitable) combination thereof; D is of (e.g., selected from among) O, F, S, P, and/or a (e.g., any suitable) combination thereof; E is of (e.g., selected from among) Co, Mn, and/or a (e.g., any suitable) combination thereof; T is of (e.g., selected from among) F, S, P, and/or a (e.g., any suitable) combination thereof; G is of (e.g., selected from among) Al, Cr, Mn, Fe, Mg, La, Ce, Sr, V, and/or a (e.g., any suitable) combination thereof; Q is of (e.g., selected from among) Ti, Mo, Mn, and/or a (e.g., any suitable) combination thereof; Z is of (e.g., selected from among) Cr, V, Fe, Sc, Y, and/or a (e.g., any suitable) combination thereof; and J is of (e.g., selected from among) V, Cr, Mn, Co, Ni, Cu, and/or a (e.g., any suitable) combination thereof.

The positive electrode active material may be, for example, lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), or lithium iron phosphate oxide (LFP).

In some embodiments, the positive electrode active material may include a lithium cobalt-based oxide. A positive electrode utilizing lithium cobalt-based oxide as a positive electrode active material may suppress or reduce battery resistance and improve overall battery performance by exhibiting a synergistic aspect in a 4.5 V-class high-voltage design or rapid charging system if (e.g., when) utilized with the described electrolyte.

The lithium cobalt-based oxide may be, for example, represented by Chemical Formula 5.

Chemical Formula 5 Liₐ₁COₓ₁M¹₍₁₋ₓ₁₎O₂

In Chemical Formula 5, 0.9≤a1≤1.8, and 0.7≤x1≤1, and M¹ is one or more elements of (e.g., selected from among) Al, B, Ba, Ca, Ce, Cr, Cu, F, Fe, Mg, Mn, Mo, Ni, P, S, Se, Si, Sr, Ti, V, W, Y, Zn, and Zr.

In Chemical Formula 5, x1 represents a molar content (e.g., amount) of cobalt and may be, for example, 0.8≤x1≤1, 0.9≤x1≤1, or 0.95≤x1≤1.

An average particle diameter (D50) of the positive electrode active material may be about 1 micrometer (µm) to about 25 µm, for example, about 3 µm to about 25 µm, about 5 µm to about 25 µm, about 5 µm to about 20 µm, about 8 µm to about 20 µm, or about 10 µm to about 18 µm. A positive electrode active material having the described particle size range(s) may be harmoniously mixed with other components in a positive electrode active material layer and/or may realize relatively high capacity and relatively high energy density. Herein, the average particle diameter (D50) may be measured by a particle size analyzer utilizing a laser diffraction method, and may refer to a diameter of particles whose cumulative volume is 50 vol% in the particle size distribution.

The positive electrode active material may be in the form of (or provide) secondary particles formed by aggregating a plurality of primary particles, or may be in the form of (or provide) single particles. In one or more embodiments, the positive electrode active material may have a spherical or near-spherical shape, or may have a polyhedral or amorphous shape.

The positive electrode active material layer may include a binder. The binder may improve binding properties of positive electrode active material particles with one another and/or with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but the present disclosure is not limited thereto.

A content (e.g., amount) of the binder in the positive electrode active material layer may be approximately about 0.5 wt% to about 5 wt% based on a total weight of the positive electrode active material layer.

The positive electrode active material layer may include a conductive material (e.g., an electron conductor). The conductive material may be utilized to provide or impart conductivity to the electrode, and any conductive material that does not cause chemical change and conducts electrons may be utilized in the battery. Examples of the conductive material may include a carbon-based material such as natural graphite, artificial graphite, carbon black, acetylene black, ketjen black, carbon fiber, carbon nanofiber, and/or carbon nanotube; a metal-based material containing copper, nickel, aluminum, silver, and/or the like, that may be in the form of (or provide) a metal powder or a metal fiber; a conductive polymer such as a polyphenylene derivative; or any suitable mixture thereof.

A content (e.g., amount) of the conductive material in the positive electrode active material layer may be about 1 wt% to about 5 wt% based on the total weight of the positive electrode active material layer.

For example, an aluminum foil may be utilized as the positive electrode current collector, but the present disclosure is not limited thereto.

### Negative Electrode

A negative electrode for a rechargeable lithium battery includes a current collector and a negative electrode active material layer on the current collector. The negative electrode active material layer may include a negative electrode active material, and may further include a binder and/or a conductive material (e.g., an electron conductor).

The negative electrode active material includes at least one selected from among a material capable of reversibly intercalating/deintercalating lithium ions, lithium metal, a lithium metal alloy, a material capable of doping and undoping lithium, and/or a transition metal oxide.

The material capable of reversibly intercalating/deintercalating lithium ions may be a carbon-based negative electrode active material, and may include, for example, crystalline carbon, amorphous carbon, and/or a (e.g., any suitable) combination thereof. The crystalline carbon may be irregular, or plate, flake, spherical, or fiber shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal of (e.g., selected from among) Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may be silicon, a silicon-carbon composite, SiOₓ (0 < x ≤ 2), a Si-Q alloy (wherein Q is an element of (e.g., selected from among) an alkali metal, an alkaline-earth metal, a Group 13 element, a Group 14 element, a Group 15 element, a Group 16 element, a transition metal, a rare earth element, and/or a (e.g., any suitable) combination thereof, and not Si), and the Sn-based negative electrode active material may be Sn, SnO₂, SnOₓ (0 < x < 2), a Sn-R alloy (wherein R is an element of (e.g., selected from among) an alkali metal, an alkaline-earth metal, a Group 13 element, a Group 14 element, a Group 15 element, a Group 16 element, a transition metal, a rare earth element, and/or a (e.g., any suitable) combination thereof, and not Sn) and/or the like. At least one of these materials may be mixed with SiO₂. The elements Q and R may be of (e.g., selected from among) Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and/or a (e.g., any suitable) combination thereof.

The silicon-carbon composite may be, for example, a silicon-carbon composite including a core including crystalline carbon and silicon particles and an amorphous carbon coating layer arranged on the surface of the core. The crystalline carbon may be artificial graphite, natural graphite, and/or a (e.g., any suitable) combination thereof. The amorphous carbon coating layer may include a coal-based pitch, mesophase pitch, a petroleum-based pitch, coal-based oil, petroleum-based heavy oil, or a polymer resin such as a phenolic resin, a furan resin, or a polyimide resin. In some embodiments, a content (e.g., amount) of silicon may be about 10 wt% to about 50 wt% based on a total weight of the silicon-carbon composite. In one or more embodiments, the content (e.g., amount) of the crystalline carbon may be about 10 wt% to about 70 wt% based on the total weight of the silicon-carbon composite, and the content (e.g., amount) of the amorphous carbon (e.g., in the amorphous carbon coating layer) may be about 20 wt% to about 40 wt% based on the total weight of the silicon-carbon composite. In one or more embodiments, a thickness of the amorphous carbon coating layer may be about 5 nanometer (nm) to about 100 nm. An average particle diameter (D50) of the silicon particles may be about 10 nm to about 20 µm. In one or more embodiments, the average particle diameter (D50) of the silicon particles may be about 10 nm to about 200 nm. The silicon particles may be present as an oxide (e.g., in an oxidized form), and an atomic content (e.g., amount) ratio of Si:O in the silicon particles (e.g., indicating a degree of oxidation) may be about 99:1 to about 33:67. The silicon particles may be SiOₓ particles, and the range of x in SiOₓ may be greater than about 0 and less than or equal to about 2. In the present specification, if (e.g., when) a definition is not otherwise provided, an average particle diameter (D50) indicates a particle where a cumulative volume is about 50 vol% in a particle distribution.

The Si-based negative electrode active material or the Sn-based negative electrode active material may be mixed with the carbon-based negative electrode active material. If (e.g., when) the Si-based negative electrode active material or the Sn-based negative electrode active material and carbon-based negative electrode active material are mixed, a mixing ratio thereof may be about 1:99 to about 90:10 by weight ratio.

In the negative electrode active material layer, the negative electrode active material may be included in an amount of about 95 wt% to about 99 wt% based on a total weight of the negative electrode active material layer.

In some embodiments, the negative electrode active material layer may further include a binder, and may optionally further include a conductive material. A content (e.g., amount) of the binder in the negative electrode active material layer may be about 1 wt% to about 5 wt% based on the total weight of the negative electrode active material layer. In one or more embodiments, if (e.g., when) the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well attach the negative electrode active material particles to each other and, also, to well attach the negative electrode active material to the current collector. The binder may include a non-aqueous binder, an aqueous binder, a dry binder, and/or a (e.g., any suitable) combination thereof.

The non-water-soluble binder may be of (e.g., selected from among) polyvinylchloride, carboxylated polyvinylchloride, polyvinylfluoride, an ethylene oxide-containing polymer, ethylene propylene copolymer, polystyrene, polyvinylpyrrolidone, polyurethane, polytetrafluoroethylene, polyvinylidene fluoride, polyethylene, polypropylene, polyamideimide, polyimide, and/or a (e.g., any suitable) combination thereof.

The water-soluble binder may be a rubber-based binder or a polymer resin binder. The rubber-based binder may be of (e.g., selected from among) a styrene-butadiene rubber, an acrylated styrene-butadiene rubber, an acrylonitrile-butadiene rubber, an acrylic rubber, a butyl rubber, a fluorine rubber, and/or a (e.g., any suitable) combination thereof. The polymer resin binder may be of (e.g., selected from among) polyethylene oxide, polyvinylpyrrolidone, polyepichlorohydrine, polyphosphazene, polyacrylonitrile, an ethylene propylene diene copolymer, polyvinylpyridine, chlorosulfonated polyethylene, a latex, a polyester resin, an acrylic resin, a phenolic resin, an epoxy resin, polyvinyl alcohol, and/or a (e.g., any suitable) combination thereof.

If (e.g., when) the water-soluble binder is utilized as a negative electrode binder, a cellulose-based compound may be further utilized to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative electrode active material.

The conductive material may also be included to provide electrode conductivity and any electrically conductive material may be utilized as a conductive material unless it causes a chemical change. Examples of the conductive material include a carbon-based material such as natural graphite, artificial graphite, carbon black, acetylene black, ketjen black, a carbon fiber, a carbon nanotube, and/or the like; a metal-based material having a shape of a metal powder or a metal fiber including copper, nickel, aluminum silver, and/or the like; a conductive polymer such as a polyphenylene derivative; or a mixture thereof.

The negative electrode current collector may include a copper foil, a nickel foil, a stainless steel foil, a titanium foil, a nickel foam, a copper foam, a polymer substrate coated with a conductive metal, and/or a (e.g., any suitable) combination thereof.

### Electrolyte Solution

The electrolyte solution includes an additive including a bicyclic sulfate compound, a lithium borate compound, and/or a (e.g., any suitable) combination thereof, and may further include a non-aqueous organic solvent; a lithium salt; and other additives.

### Non-aqueous Organic Solvent

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, and/or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate. (EC), propylene carbonate (PC), butylene carbonate (BC), and/or the like.

The ester-based solvent may include methyl acetate, ethyl acetate, n-propyl acetate, dimethylacetate, methylpropionate, ethylpropionate, γ-butyrolactone, decanolide, valerolactone, mevalonolactone, caprolactone, and/or the like.

The ether-based solvent may include dibutyl ether, tetraglyme, diglyme, dimethoxyethane, 2-methyltetrahydrofuran, tetrahydrofuran, and/or the like,

The ketone-based solvent may include cyclohexanone, and/or the like.

Additionally, the alcohol-based solvent may include ethanol, isopropyl alcohol, and/or the like, and
the aprotic solvent may include nitriles such as R-CN (wherein R is a C2 to C20 linear, branched, or ring-structured hydrocarbon group and may include a double bond, an aromatic ring, or an ether bond), amides such as dimethylformamide, dioxolanes such as 1,3-dioxolane, sulfolanes, and/or the like.

The described non-aqueous organic solvents may be utilized alone or in combination with one or more of them, and if (e.g., when) utilized in combination with one or more, a mixing ratio may be appropriately adjusted according to the desired or suitable battery performance, which is well understood by those skilled in the art.

In one or more embodiments, in the case of the carbonate-based solvent, a mixture of cyclic carbonate and chain carbonate may be utilized. In this case, if (e.g., when) the cyclic carbonate and the chain carbonate are mixed in a volume ratio of about 1:1 to about 1:9, the performance of the electrolyte may be improved.

The non-aqueous organic solvent may further include an aromatic hydrocarbon-based organic solvent in addition to the carbonate-based solvent. At this time, a carbonate-based solvent and an aromatic hydrocarbon-based organic solvent may be mixed and utilized in a volume ratio of about 1:1 to about 30:1.

The aromatic hydrocarbon-based solvent may be an aromatic hydrocarbon-based compound of Chemical Formula I.

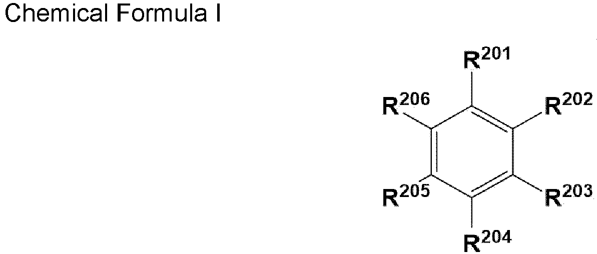

In Chemical Formula I, R²⁰¹ to R²⁰⁶ may each independently be the same or different and are of (e.g., selected from among) hydrogen, a halogen, a C1 to C10 alkyl group, a C1 to C10 haloalkyl group, and/or a (e.g., any suitable) combination thereof.

Examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or a (e.g., any suitable) combination thereof.

The electrolyte solution may further include vinylene carbonate or an ethylene carbonate-based compound represented by Chemical Formula II in order to improve cycle-life of a battery.

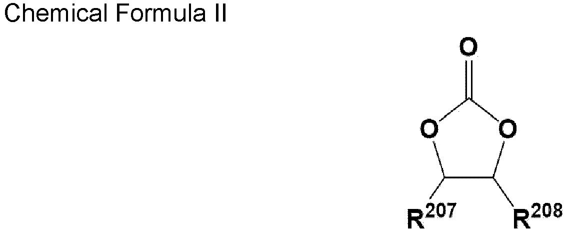

In Chemical Formula II, R²⁰⁷ and R²⁰⁸ may each independently be the same or different, and hydrogen, a halogen, a cyano group, a nitro group, or a fluorinated C1 to C5 alkyl group, provided that at least one of R²⁰⁷ and R²⁰⁸ is a halogen, a cyano group, a nitro group, or a fluorinated C1 to C5 alkyl group, and R²⁰⁷ and R²⁰⁸ are not concurrently (e.g., simultaneously) hydrogen.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be utilized within an appropriate or suitable range.

### Lithium Salt

The lithium salt dissolved in the non-organic solvent supplies lithium ions in a battery, enables a basic operation of a rechargeable lithium battery, and improves transportation of the lithium ions between positive and negative electrodes.

Examples of the lithium salt include at least one of (e.g., at least one selected from among) LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide, LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) wherein, x and y are natural numbers, for example, an integer in a range of 1 to 20, lithium difluoro(bisoxalato) phosphate, LiCl, Lil, LiB(C₂O₄)₂ (lithium bis(oxalato) borate, LiBOB), and lithium difluoro (oxalato)borate (LiDFOB).

The lithium salt may be utilized in a concentration in a range of about 0.1 M to about 2.0 M. If (e.g., when) the lithium salt is included at the described concentration range(s), an electrolyte may have excellent or suitable performance and lithium ion mobility due to optimal or suitable electrolyte conductivity and viscosity.

### Other Additives

The electrolyte solution may further include other additives in addition to the additive including the aforementioned bicyclic sulfate-based compound, lithium borate compound, or combination thereof. The other additives may provide a synergistic aspect if (e.g., when) combined with the aforementioned additive.

The other additives may include one or more of (e.g., at least one selected from among) vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium difluorophosphate (LiPO₂F₂), and 2-fluorobiphenyl (2-FBP), but are not limited thereto.

### Separator

The separator 113 separates a positive electrode 114 and a negative electrode 112 and provides a transporting passage for lithium ions and may be any generally-utilized separator in a lithium ion battery. The separator may have relatively low resistance to ion movement of the electrolyte and excellent or suitable ability to absorb the electrolyte. The separator may include, for example, a glass fiber, polyester, polyethylene, polypropylene, polytetrafluoroethylene, and/or a (e.g., any suitable) combination thereof and may have a form (or provide) of a non-woven fabric or a woven fabric. For example, in a lithium ion battery, a polyolefin-based polymer separator such as polyethylene and polypropylene is mainly utilized. In order to ensure the heat resistance or mechanical strength, a coated separator including a ceramic component or a polymer material may be utilized. Optionally, it may have a mono-layered or multi-layered structure.

Rechargeable lithium batteries may be classified as lithium ion batteries, lithium ion polymer batteries, and lithium polymer batteries according to the presence of a separator and the type or kind of electrolyte utilized therein. The rechargeable lithium batteries may have a variety of shapes and sizes, and include cylindrical, prismatic, coin, or pouch-type or kind batteries, and may be thin film batteries or may be rather bulky in size. Structures and manufacturing methods for lithium ion batteries pertaining to this disclosure are well suitable in the art.

A method of manufacturing the rechargeable lithium batteries according to some embodiments may include (1) preparing basic electrode slurry by dispersing or dissolving an electrode active material, a binder, and a conductive material in a solvent; (2) mixing an additive such as a bicyclic sulfate-based compound, a lithium borate compound, and/or a (e.g., any suitable) combination thereof with the basic electrode slurry to prepare electrode slurry; (3) coating the electrode slurry on a current collector; and (4) drying the coated electrode slurry at a lower temperature than a boiling point of the additive; and (5) compressing it. Here, the listing of the process in a particular order should not necessarily means that the invention or claims require that particular order. That is, the general rule that unless the steps, tasks, or acts of a process (e.g., a method claim) actually recite an order, the steps, tasks, or acts should not be construed to require one.

The electrode may be a positive or negative electrode, for example, the positive electrode.

In the mixing of the additive with the basic electrode slurry, the additive may be utilized in an amount of greater than or equal to about 0.1 wt% and less than about 1 wt% based on a total amount of the electrode slurry.

If (e.g., when) the additive is utilized in an amount of less than about 0.1 wt% based on the total amount of the electrode slurry, substantiallyuniform pores with a large volume may not be formed in the electrode, and if (e.g., when) the amount is greater than or equal to about 1 wt%, because viscosity of the electrode slurry is increased, the slurry may not be coated on the current collector.

The coating of the electrode slurry on the current collector may adopt a method of uniformly (substantially uniformly) dispersing it with a doctor blade, and/or the like after applying the electrode slurry on the current collector, die casting, comma coating, screen printing, and/or the like. In one or more embodiments, the electrode slurry may be bonded with the current collector in a pressing or lamination method on a separate substrate after molding.

The drying may be performed in a vacuum oven by removing the solvent and moisture in the slurry to dry the coated slurry on the metal current collector.

For example, the drying is performed at about 50 °C to about 200 °C.

For example, the drying temperature may be less than a boiling point of the additive.

Because a drying temperature of greater than about 200 °C, which is higher than the boiling point of the additive, the additive may be gasified during the drying and not present in the positive electrode.

The compressing may be, in order to increase capacity density of the electrode after the coating process and increase adherence between the current collector and the active material, performed by passing the electrode between two rolls heated at a high temperature to compress it down to a desired or suitable thickness.

A rechargeable lithium battery manufactured in the aforementioned method according to some embodiments may be substantially the same as described herein and thus will not be repeatedly illustrated.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

Examples and comparative examples of the present disclosure are described in more detail herein. However, the following examples are only examples of the present disclosure, and the present disclosure is not limited to the following examples.

### Examples

### Example 1

### For reference, in the following positive electrode slurry composition, "wt%" is based on a total content (e.g., amount) of positive electrode slurry (e.g., including a positive electrode active material + a binder + a conductive material + an additive).

LiNi_{0.91}Co_{0.66}Al_{0.13}V_{0.02}O₂ (hereinafter, referred to as NCA) as a positive electrode active material (Gen.6, Ni₉₁V₂), polyvinylidene fluoride as a binder, and carbon nanotube as a conductive material were mixed in a weight ratio of 97:2:1 and then, dispersed in N-methyl pyrrolidone to prepare a basic positive electrode slurry.

To the basic positive electrode slurry, 0.1 wt% of lithium bis(oxalato) borate (hereinafter, referred to as LiBOB) (a boiling point: 250 °C) was added to prepare a positive electrode slurry.

The positive electrode slurry was coated on a 14 micrometer (µm)-thick Al foil current collector, dried at 200 °C, and compressed to manufacture a positive electrode.

Negative electrode active material slurry is prepared by mixing artificial graphite as a negative electrode active material, a styrene-butadiene rubber as a binder, and carboxylmethyl cellulose as a thickener in a weight ratio of 97:1:2 and then, dispersing the mixture in distilled water. The negative electrode active material slurry was coated on a 10 µm-thick Cu foil current collector, dried at 100 °C, and compressed, manufacturing a negative electrode.

An electrolyte solution was prepared by mixing ethylene carbonate (EC), ethylmethyl carbonate (EMC), and dimethyl carbonate (DMC) in a volume ratio of 20:10:70 in order and then, dissolving 1.5 M of LiPF₆ lithium salt in the non-aqueous organic solvent.

An electrode assembly was manufactured by interposing a separator of a polyethylene-polypropylene multilayer structure with a thickness of 25 µm between the manufactured positive electrode and the negative electrode, and the electrode assembly was inserted into a cylindrical battery case and then the prepared electrolyte solution according to Example 1 was injected therein, to manufacture a rechargeable lithium battery cell.

### Example 2

A rechargeable lithium battery cell was manufactured in substantially the same manner as in Example 1 except that the positive electrode slurry was prepared by mixing 0.3 wt% of lithium bis(oxalato) borate.

### Example 3

A rechargeable lithium battery cell was manufactured in substantially the same manner as in Example 1 except that the positive electrode slurry was prepared by mixing 0.1 wt% of a compound represented by Chemical Formula 1-1 (a boiling point: 480 °C) instead of the lithium bis(oxalato) borate.

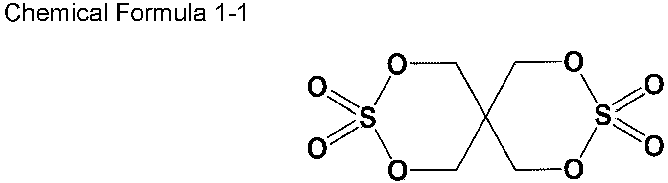

### Example 4

A rechargeable lithium battery cell was manufactured in substantially the same manner as in Example 1 except that lithium phosphate (LiFePO₄, hereinafter, referred to as LFP) was utilized as the positive electrode active material.

### Examples 5 and 6

Each rechargeable lithium battery cell was manufactured in substantially the same manner as in Example 4 except that the lithium bis(oxalato) borate for Example 5 and Example 6 was utilized in an amount of 0.3 wt% and 0.5 wt%, respectively, to prepare the positive electrode slurry.

### Comparative Example 1

A rechargeable lithium battery cell is manufactured in substantially the same manner as in Example 1 except that the positive electrode slurry was prepared by mixing no additive (e.g., such as the lithium bis(oxalato) borate).

### Comparative Example 2 and Comparative Example 3

A rechargeable lithium battery cell was manufactured in substantially the same manner as in Example 1 except that the lithium bis(oxalato) borate for Comparative Example 2 and Comparative Example 3 was mixed in an amount of 0.05 wt% and 1.0 wt%, respectively, to prepare the positive electrode slurry.

### Comparative Example 4

A rechargeable lithium battery cell was manufactured in substantially the same manner as in Example 4 except that the positive electrode slurry was prepared by mixing no additive (e.g., such as the lithium bis(oxalato) borate).

Table 1 shows types (kinds) of the positive electrode active materials and types (kinds) and contents of the additives in the rechargeable lithium battery cells of Examples 1 to 6 and Comparative Examples 1 to 4.

**Table 1**

| | Positive electrode active material | Additive (boiling point) | Amount of additive (wt%) |
|---|---|---|---|
| Example 1 | NCA | LiBOB (250 °C) | 0.1 |
| Example 2 | NCA | LiBOB | 0.3 |
| Example 3 | NCA | Chemical Formula 1-1 (480 °C) | 0.1 |
| Example 4 | LFP | LiBOB | 0.1 |
| Example 5 | LFP | LiBOB | 0.3 |
| Example 6 | LFP | LiBOB | 0.5 |
| Comparative Example 1 | NCA | - | - |
| Comparative Example 2 | NCA | LiBOB | 0.05 |
| Comparative Example 3 | NCA | LiBOB | 1.0 |
| Comparative Example 4 | LFP | - | - |

### Experimental Examples

### 1. Evaluation of Rheological Properties of Positive Electrode Slurry

Rheological properties of the positive electrode slurries was evaluated to check whether or not the coating properties had been deteriorated if (e.g., when) the additive was added to the positive electrode slurry.

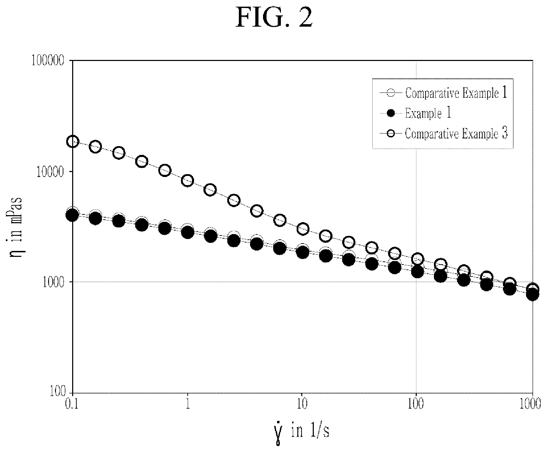

FIG. 2 is a graph showing the viscosity (e.g., rheology, "η", units of millipascal seconds (mPa-s)) according to a shear rate (e.g., "y", units of inverse seconds (1/s)) of the positive electrode slurries prepared in Example 1 and Comparative Examples 1 and 3.

Referring to FIG. 2, Example 1, in which lithium bis(oxalato) borate is included as an additive, exhibited similar shear viscosity of the positive electrode slurry to Comparative Example 1, in which no additive is included.

In contrast, Comparative Example 3, in which the lithium bis(oxalato) borate is excessively included, exhibited excessively high viscosity of the slurry and thereby, deteriorated coating properties.

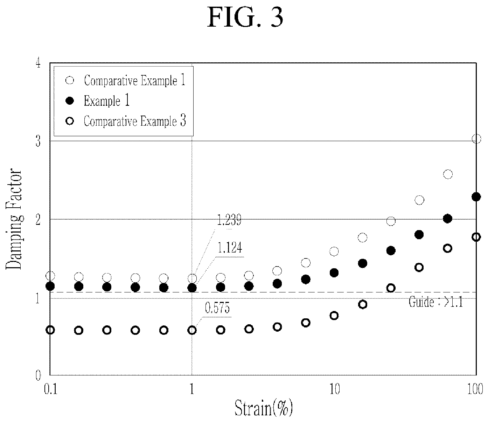

FIG. 3 is a damping factor graph showing the (viscoelastic) modulus (e.g., damping factor) (Pa) according to strain (%) of the positive electrode slurries prepared in Example 1 and Comparative Examples 1 and 3.

Referring to FIG. 3, coating properties of the prepared positive electrode slurry may be examined. For example, the positive electrode slurry of Example 1 exhibited DR (Guide) of greater than 1.1, which confirms that even though the additive is added to the positive electrode active material, the additive does not affect rheological properties of the slurry but maintains coating properties of an electrode plate. However, because Comparative Example 3, in which the additive is excessively added to the positive electrode active material, exhibited DR (Guide) of 1.1 or less, it may be confirmed that as elasticity of the slurry is increased, coating properties of an electrode plate may be difficult to secure.

### 2. Evaluation of Electrolyte Solution Impregnability

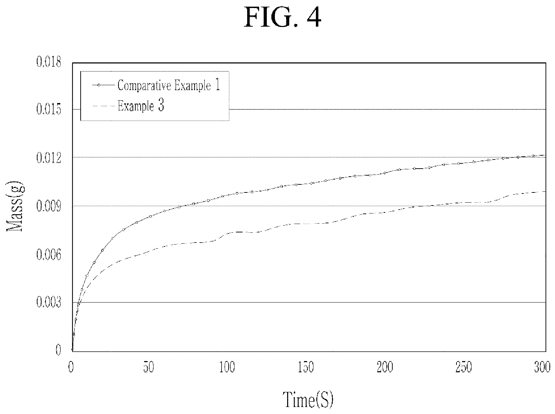

An electrolyte solution was injected into the electrode assemblies manufactured in Example 3 and Comparative Example 1, and an amount of electrolyte solution impregnated per hour (impregnation amount, mass (g)) was measured, and the results are shown in FIG. 4.

The amount of electrolyte (impregnation amount) impregnated per hour in the electrode assembly may be calculated utilizing Equation 1. Impregnation amount = (Weight of electrolyte after impregnating electrode assembly in electrolyte solution, weight of electrode assembly) - (Weight of initial electrode assembly)

Referring to Figure 4, the impregnability of the electrolyte solution was improved in Example 3 compared to Comparative Example 1.

### 3. Evaluation of Positive Electrode Porosity

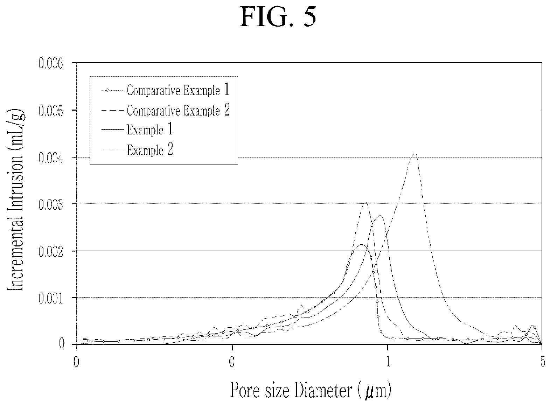

The positive electrodes were measured with respect to porosity (%) in a mercury decompression method by utilizing a mercury porosimeter, and the results are shown in FIGs. 5 to 7.

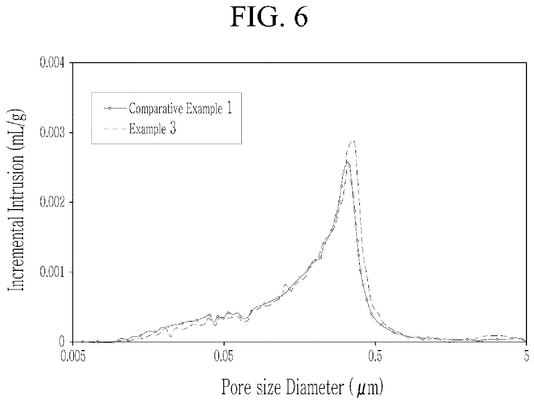

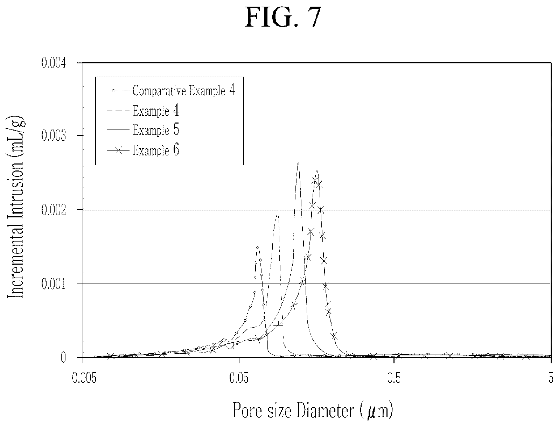

For example, FIG. 5 is a graph measuring the positive electrode porosity of Examples 1 and 2 and Comparative Examples 1 and 2. FIG. 6 is a graph measuring the positive electrode porosity of Example 3 and Comparative Example 1. FIG. 7 is a graph measuring the positive electrode porosity of Examples 4 to 6 and Comparative Example 4.

Referring to FIG. 5, if (e.g., when) the additive was added in an amount of less than 0.1 wt%, the porosity was not changed, but if (e.g., when) the additive was added in an amount of greater than or equal to 0.1 wt%, the porosity was significantly increased.

Referring to FIG. 6, if (e.g., when) a compound represented by Chemical Formula 1-1 was utilized as an additive, the porosity of a positive electrode was increased.

Referring to FIG. 7, even if (e.g., when) lithium phosphate (LiFePO₄) was utilized as a positive electrode active material, the higher content (e.g., amount) of an additive, the larger pore size and the higher porosity of a positive electrode.

### 4. Evaluation of DC resistance Increase Rate after High-temperature Storage

The rechargeable lithium battery cells of Examples 1 to 4 and Comparative Examples 1 to 4 were measured with respect to initial DCIR (DC internal resistance) and then, remeasured with respect to DCIR after being stored at 60 °C for 10 days. A a DCIR increase rate (%) was calculated according to Equation 2, and the results are shown in Table 2. DCIR increase rate (%) = [(DCIR after leaving for 10 days - initial DCIR)/initial DCIR] × 100

### 5. Evaluation of Charge and Discharge Characteristics after High-temperature Storage at 60 °C

Each of the rechargeable lithium battery cells of Examples 1 to 4 and Comparative Examples 1 to 4 was once charged and discharged at 0.5 C to measure initial capacity.

### Before high-temperature storage

After the cells had been stored at 60 °C for 10 days, they were discharged to 2.8 V at 0.5 C under the constant current condition and then, measured with respect to discharge capacity. Herein, charge and discharge characteristics of the cells were evaluated by calculating a capacity retention rate (%, retention) according to Equation 3. The results are shown in Table 2 where Examples 1 to 4 are labeled "EX 1" to "EX 4" and Comparative Examples 1 to 4 are labeled "CE 1" to "CE 4". Capacity retention rate (%) = [discharge capacity after leaving for 10 days / initial capacity at the start of storage] × 100

After recharging the cells, the cells were discharged to 2.8 V at 0.5 C under the constant current condition to measure recovery capacity. Herein, the cells were evaluated with respect to charge and discharge characteristics, which may be referred to as recovery characteristics, by calculating a capacity recovery rate (%, recovery) according to Equation 4, and the results are shown in Table 2. In general, the recovery characteristics may refer to storage characteristics at a high temperature. Capacity recovery rate (%) = [Recovery capacity after leaving for 10 days / Initial capacity at the start of storage] × 100

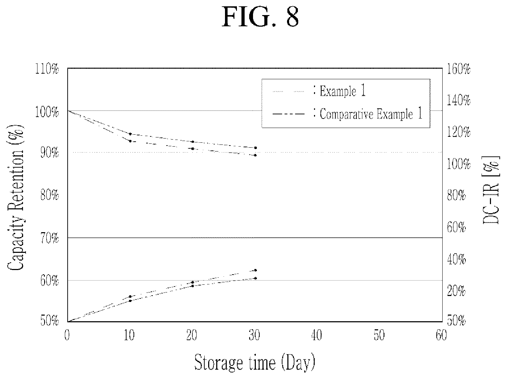

The capacity retention rate after storage at 60 °C for 10 days is graphically shown in FIG. 8.

**Table 2**

| | Initial | | After 10 days storage at 60 °C | | | | | |
|---|---|---|---|---|---|---|---|---|
| | Initial DCIR (mΩ) | Initial capacity (mAh) | DCIR (mΩ) | DCIR increase rate (%) | Discharge capacity (mAh) | Recovery capacity (mAh) | Capacity retention rate (%) | Capacity recovery rate (%) |
| EX 1 | 2.14 | 34.3 | 2.46 | 14.9% | 29.7 | 32.0 | 87.5% | 94.4% |
| EX 2 | 2.15 | 34.3 | 2.46 | 14.8% | 29.7 | 32.0 | 87.5% | 94.3% |
| EX 3 | 2.15 | 34.3 | 2.46 | 14.8% | 29.7 | 32.0 | 87.5% | 94.0% |
| EX 4 | 2.17 | 34.3 | 2.46 | 14.6% | 29.7 | 32.0 | 87.5% | 94.4% |
| CE 1 | 2.11 | 31.1 | 2.44 | 15.5% | 26.9 | 29.1 | 85.9% | 92.8% |
| CE 2 | 2.11 | 31.1 | 2.44 | 15.4% | 26.9 | 29.1 | 85.9% | 92.8% |
| CE 3 | 2.13 | 31.1 | 2.44 | 15.3% | 26.9 | 29.1 | 85.9% | 92.7% |
| CE 4 | 2.14 | 31.1 | 2.44 | 15.5% | 26.9 | 29.1 | 85.9% | 92.8% |

Referring to FIGs. 2 and 8, compared with Comparative Examples 1 to 4 (CE 1 to CE 4), Examples 1 to 4 (EX 1 to EX 4) exhibit a relatively low DCIR increase rate and a high capacity retention rate and thus much more excellent or suitable storage characteristics at a high temperature.

### 6. 25 °C Cycle-life Characteristics

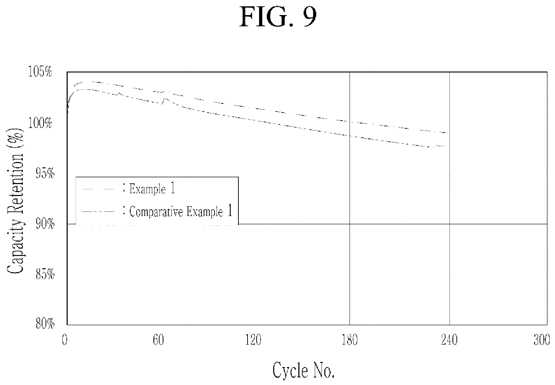

The rechargeable lithium battery cells of Example 1 (EX 1) and Comparative Example 1 (CE 1) were 60 times repeatedly charged and discharged at 0.5 C within a range of 4.25 V to 2.8 V at 25 °C to measure a capacity retention rate at the 60^{th} cycle at 25 °C, and the results are shown in FIG. 9.

Referring to FIG. 9, the rechargeable lithium battery cell of Example 1 (EX 1) exhibits more excellent or suitable room-temperature cycle-life characteristics than that of Comparative Example 1.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that the present disclosure is not limited to the disclosed embodiments. In contrast, it is intended to cover one or more suitable modifications and equivalent arrangements included within the spirit and scope of the appended claims, and equivalents thereof.

### Reference Numerals

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A rechargeable lithium battery (100), comprising
a positive electrode (114) comprising a positive electrode active material layer and a current collector;
a negative electrode (112); and
an electrolyte solution;
the positive electrode active material layer and the electrolyte solution each comprising an additive, a total of an amount of the additive in the positive electrode active material layer and an amount of the additive in the electrolyte solution is at least about 0.1 wt% and at most about 1 wt% based on a total amount of the positive electrode active material layer, and
a boiling point of the additive is at least about 200 °C.

2. The rechargeable lithium battery (100) as claimed in claim 1, wherein
the additive comprises a bicyclic sulfate-based compound, a lithium borate compound, or a combination thereof.

3. The rechargeable lithium battery (100) as claimed in claim 1 or 2, wherein
the bicyclic sulfate-based compound is represented by Chemical Formula 1: 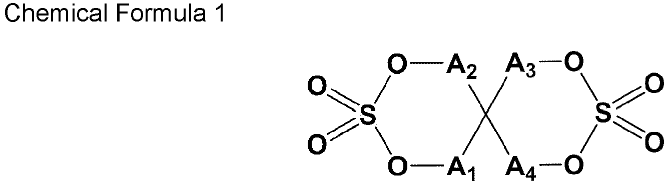
in Chemical Formula 1, A₁, A₂, A₃, and A₄ are each independently a covalent bond, an alkylene group having 1 to 5 carbon atoms substituted or unsubstituted with a substituent, a carbonyl group, or a sulfinyl group, and
wherein A₁ and A₂ are not simultaneously a covalent bond, and As and A₄ are not simultaneously a covalent bond.

4. The rechargeable lithium battery (100) as claimed in any of the claims 1 to 3, wherein
the bicyclic sulfate-based compound is any one selected from among compounds represented by Chemical Formula 1-1 to Chemical Formula 1-7:

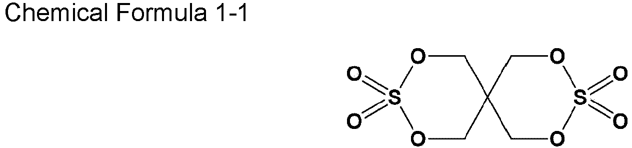

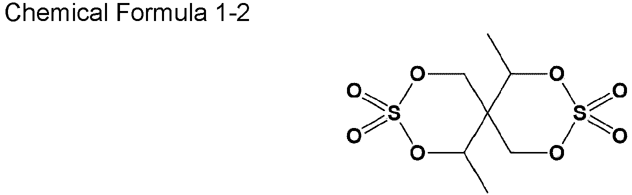

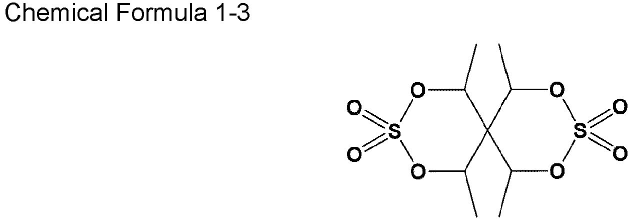

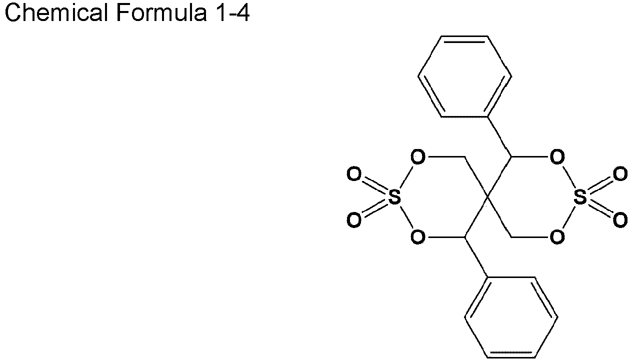

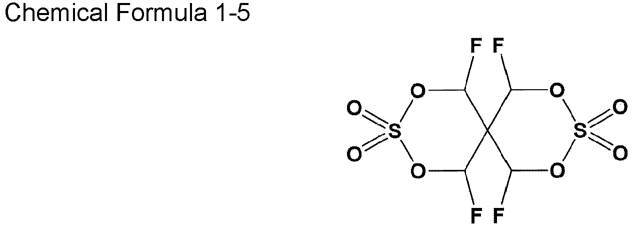

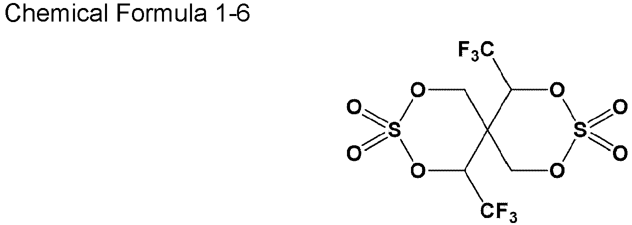

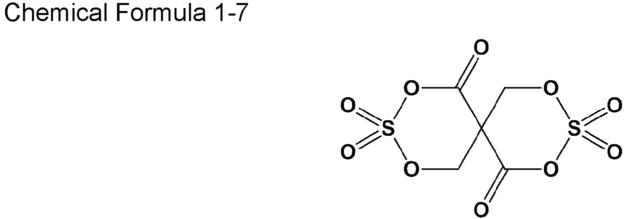

5. The rechargeable lithium battery (100) as claimed in any of the claims 1 to 4, wherein
the lithium borate compound comprises lithium tetrafluoroborate (LiBF₄), lithium bis(oxalato)borate (LiB(C₂O₄)₂, LiBOB), lithium difluoro(oxlato)borate (LiFOB), lithium bis(2-methyl-2-fluoro-malonato)borate, or a combination thereof.

6. The rechargeable lithium battery (100) as claimed in any of the claims 1 to 5, wherein
a weight ratio of the amount of the additive in the positive electrode active material layer to the amount of the additive in the electrolyte solution is about 10:90 to about 40:60.

7. The rechargeable lithium battery (100) as claimed in any of the claims 1 to 6, wherein
the positive electrode active material layer further comprises a positive electrode active material, and
the positive electrode active material comprises lithium cobalt oxide (LCO), lithium nickel oxide (LNO), lithium nickel cobalt oxide (NC), lithium nickel cobalt aluminum oxide (NCA), lithium nickel cobalt manganese oxide (NCM), lithium nickel manganese oxide (NM), lithium manganese oxide (LMO), or lithium iron phosphate oxide (LFP), or a combination thereof.

8. The rechargeable lithium battery (100) as claimed in any of the claims 1 to 7, wherein
the positive electrode (114) further comprises a binder and/or a conductive material.

9. The rechargeable lithium battery (100) as claimed in any of the claims 1 to 8, wherein
the electrolyte solution further comprises a non-aqueous organic solvent, a lithium salt, and/or an other additive.

10. The rechargeable lithium battery (100) as claimed in any of the claims 1 to 9, wherein
the non-aqueous organic solvent comprises dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate. (EC), propylene carbonate (PC), butylene carbonate (BC), or a combination thereof.

11. The rechargeable lithium battery (100) as claimed in any of the claims 1 to 10, wherein
the lithium salt comprises
LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N, LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, lithium difluoro(bisoxalato) phosphate, LiCl, Lil, LiB(C₂O₄)₂, lithium difluoro (oxalato)borate, or a combination thereof.

12. The rechargeable lithium battery (100) as claimed in any of the claims 1 to 11, wherein
the other additive comprises vinylene carbonate (VC), fluoroethylene carbonate (FEC), difluoroethylene carbonate (DFEC), chloroethylene carbonate (CEC), dichloroethylene carbonate (DCEC), bromoethylene carbonate (BEC), dibromoethylene carbonate (DBEC), nitroethylene carbonate, cyanoethylene carbonate, vinylethylene carbonate (VEC), succinonitrile (SN), adiponitrile (AN), 1,3,6-hexane tricyanide (HTCN), propene sultone (PST), propane sultone (PS), lithium tetrafluoroborate (LiBF₄), lithium difluorophosphate (LiPO₂F₂), 2-fluorobiphenyl (2-FBP), or a combination thereof.
